Europäisches Patentamt

European Patent Office

Office européen des brevets

(11) Numéro de publication : **0 088 000**
**B1**

(12) **FASCICULE DE BREVET EUROPÉEN**

(45) Date de publication du fascicule du brevet :
16.04.86

(21) Numéro de dépôt : **83400322.0**

(22) Date de dépôt : **15.02.83**

(51) Int. Cl.⁴ : **A 23 N 15/00**, A 23 N 15/06,
A 23 N 7/02

(54) Machine à tourner ou mettre en forme les légumes ou produits analogues.

(30) Priorité : **23.02.82 FR 8202928**

(43) Date de publication de la demande :
**07.09.83 Bulletin 83/36**

(45) Mention de la délivrance du brevet :
**16.04.86 Bulletin 86/16**

(84) Etats contractants désignés :
**BE CH DE GB IT LI NL**

(56) Documents cités :
**DE-A- 2 525 784
DE-C- 69 821
FR-A- 1 447 631
FR-A- 2 153 470
US-A- 3 075 634
US-A- 4 109 021**

(73) Titulaire : **Cailloux, Jean-François
12, allée de Montfermeil
F-93340 Le Raincy (FR)**

(72) Inventeur : **Cailloux, Jean-François
12, allée de Montfermeil
F-93340 Le Raincy (FR)**

(74) Mandataire : **Coutel, Jean-Claude
Cabinet AYMARD & COUTEL 20, rue Vignon
F-75009 Paris (FR)**

Jouve, 18, rue St-Denis, 75001 Paris, France

## Description

Dans l'art culinaire, on désigne par légume tourné un légume qui est présenté au consommateur sous une forme géométrique particulière à facettes courbes successives réparties circulairement, les faces terminales du légume étant parallèles et de forme plane.

Ce mode de présentation s'applique non seulement aux légumes (pommes de terre, carottes, navets, etc...), mais aussi à certains fruits ou agrumes (pommes, etc...).

Actuellement, le tournage des légumes se fait à la main ; à l'aide d'un couteau ou autre accessoire d'épluchage, l'opérateur réalise une à une les facettes successives, puis tronçonne les deux extrémités du légume. On conçoit aisément que ce travail est délicat et surtout long ; il en résulte que les légumes tournés sont réservés à une cuisine de luxe ou de semi-luxe, donc onéreuse.

On connaît, par le document US-A-4 109 021, un procédé et une machine permettant l'épluchage, le perçage central et l'enlèvement des deux parties axiales terminales d'un ananas, l'épluchage se faisant par rotation continue de l'ananas sur lui-même, en coopération avec un outil de coupe, des moyens de coupe étant prévus pour les parties terminales et la machine comportant des moyens de transfert pour déplacer l'ananas. Mais cette technique, du fait de la rotation continue de l'ananas sur lui-même, ne permet pas la réalisation de facettes successives.

On connaît, par le moment DE-A-2 525 784, un procédé et une machine permettant l'épluchage de fruits par découpe puis décollement de la peau suivant deux calottes terminales et des secteurs sphériques définis par des plans méridiens. Mais cette machine ne permet que de débarrasser le fruit de sa peau, et non pas de le façonner pour lui faire comporter des facettes successives.

Le but de l'invention est de proposer une machine qui permette de réaliser mécaniquement et rapidement le tournage des légumes ou analogues sans intervention manuelle directe de l'opérateur sur le légume.

A cet effet, la machine selon l'invention pour tourner, c'est-à-dire pour mettre en forme, les légumes ou articles analogues, comportant un outil de tournage ainsi que des outils de coupe de parties terminales du légume et des moyens de transfert, est caractérisée par le fait qu'elle comporte : une pince de tournage comprenant deux mors propres à saisir le légume sur deux extrémités opposées, ou parties terminales, par actions axiales antagonistes sur l'axe de rotation sur elle-même de la pince ; au moins, un outil de tournage autour d'un axe parallèle à l'axe commun de la pince de tournage et du légume, cet outil étant en forme de solide de révolution autour de son axe de rotation ; des moyens pour successivement rapprocher et éloigner l'outil de tournage par rapport à la pince de tournage ; des moyens pour faire tourner la pince sur elle-même d'un angle prédéterminé entre deux opérations de tournage, de manière que des facettes successives soient formées sur la surface latérale du légume ; des moyens d'extraction du légume hors de la pince et de transfert ; et un poste de coupe de sortie à deux outils de coupe espacés, propres à supprimer sur le légume à facettes ses parties terminales au moins dans les zones où l'outil de tournage n'a pas enlevé de matière, de manière que les facettes usinées débouchent axialement sur deux faces radiales terminales.

Suivant un mode de réalisation préféré, la machine comporte en outre au moins l'un des éléments suivants : un poste d'amenée comprenant une pince d'amenée mobile, d'axe parallèle à celui du légume et agencée pour saisir celui-ci sur sa surface périphérique en laissant libres ses parties terminales ; un poste de coupe d'entrée à deux outils de coupe espacés propres à supprimer initialement sur le légume deux parties terminales préliminaires ; des moyens moteurs pour faire passer la pince d'amenée successivement d'un poste d'alimentation en légumes, audit poste de coupe d'entrée, puis à la pince de tournage ; un poste d'extraction comprenant, comme moyens d'extraction et de transfert, une pince d'extraction mobile d'axe parallèle à celui du légume et agencée pour saisir celui-ci sur sa surface périphérique à facettes, en laissant libres les extrémités axiales du légume, et des moyens moteurs pour faire passer la pince d'extraction successivement de la zone de la pince de tournage, au poste de coupe de sortie, puis à un poste d'extraction où elle libère le légume fini.

D'autres caractéristiques de l'invention apparaîtront à la lecture de la description qui va suivre, faite en référence aux dessins annexés, dans lesquels :

Figure 1 est une vue en plan d'une machine selon l'invention pour tourner un légume à la fois ;

Figure 2 est une coupe verticale selon II-II de la machine de la Fig. 1 ;

Figure 3 montre, en coupe selon III-III de la Fig. 2, un détail de la machine ;

Figure 4A à 4F et Fig. 5A à 5F sont des vues respectivement en élévation et en plan montrant le légume dans ses diverses phases de traitement ;

Figure 6 est une vue schématique en plan d'une machine séquentielle à tourner plusieurs légumes en même temps ;

Figure 7 est une coupe selon VII-VII de la machine de la Fig. 6 ;

Figure 8 est une coupe axiale, à plus grande échelle, d'une pince de tournage de la machine de la Fig. 6 ;

Figure 9 est une coupe selon IX-IX de la Fig. 6, montrant un détail ; et

Figure 10 montre schématiquement une variante pour la fourniture des légumes.

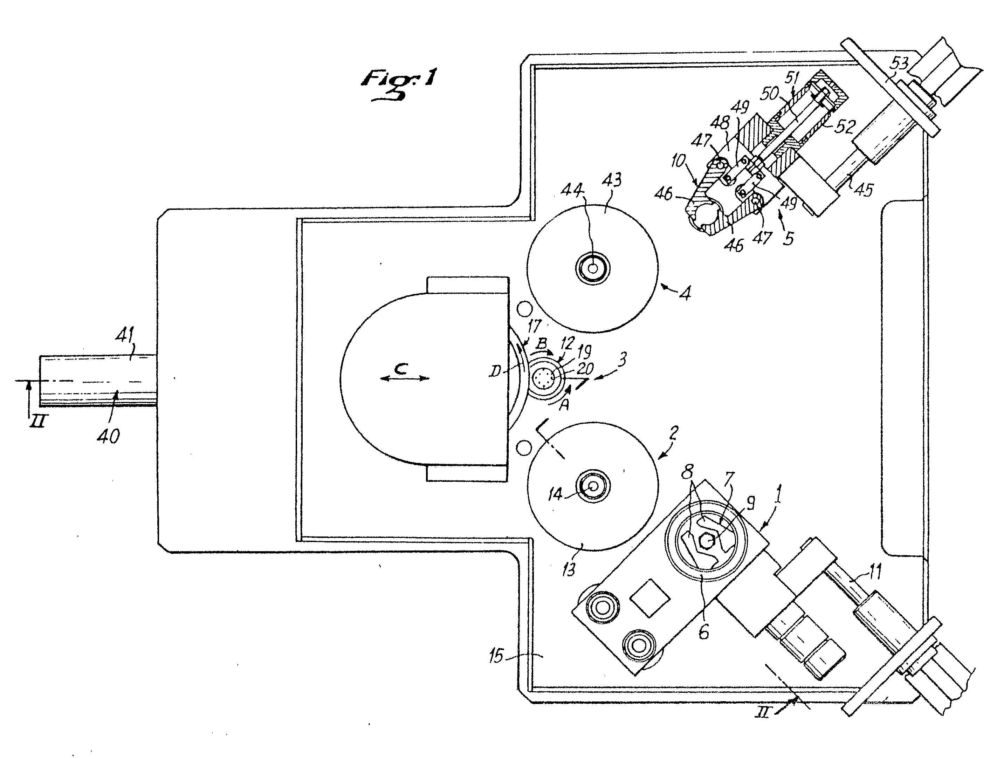

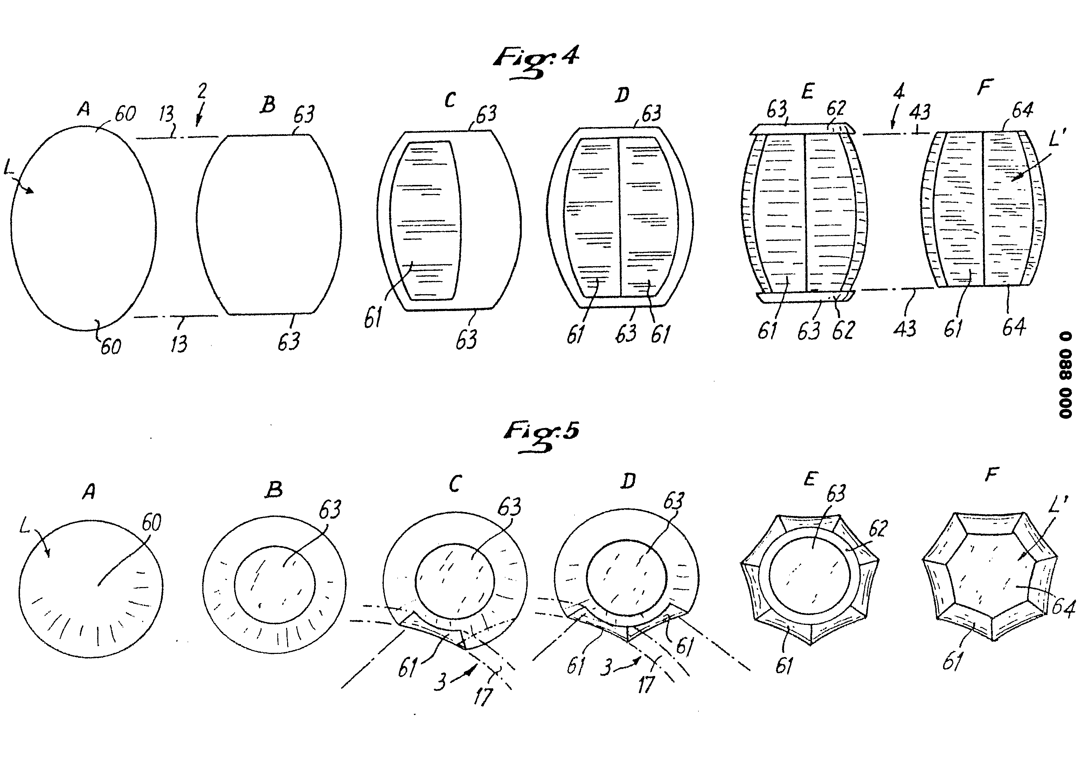

La machine représentée aux Fig. 1 à 3 est destinée à tourner un légume à la fois. Pour plus de clarté, le légume est seulement représenté sur les Fig. 4 et 5 dans ses diverses phases d'usinage.

Elle comporte dans son ensemble : un poste 1 d'amenée des légumes ; un premier poste 2 de coupe destiné à supprimer sur le légume à tourner les calottes terminales axiales 60 ; un poste de tournage 3 dans lequel sont façonnées par usinages successifs, avec enlèvement de matière, les facettes 61 ; un deuxième poste de coupe 4 destiné à supprimer encore sur le légume des parties terminales axiales 62 ; et un poste 5 d'extraction du légume tourné et fini L'.

Le poste 1 comporte une trémie verticale fixe 6 d'alimentation en légumes L non épluchés, dans laquelle les légumes sont introduits par le haut avec leur axe en position verticale.

La trémie 6 converge vers le bas et elle est ouverte à son extrémité inférieure pour délivrer le légume inférieur à une pince d'amenée 7 dont les deux mors 8 peuvent basculer chacun autour d'un axe vertical.

Sous la pince 7 est prévue une butée fixe 9 définissant la position du légume inférieur après qu'il a été libéré de la trémie 6 en vue de sa prise en charge par la pince 7.

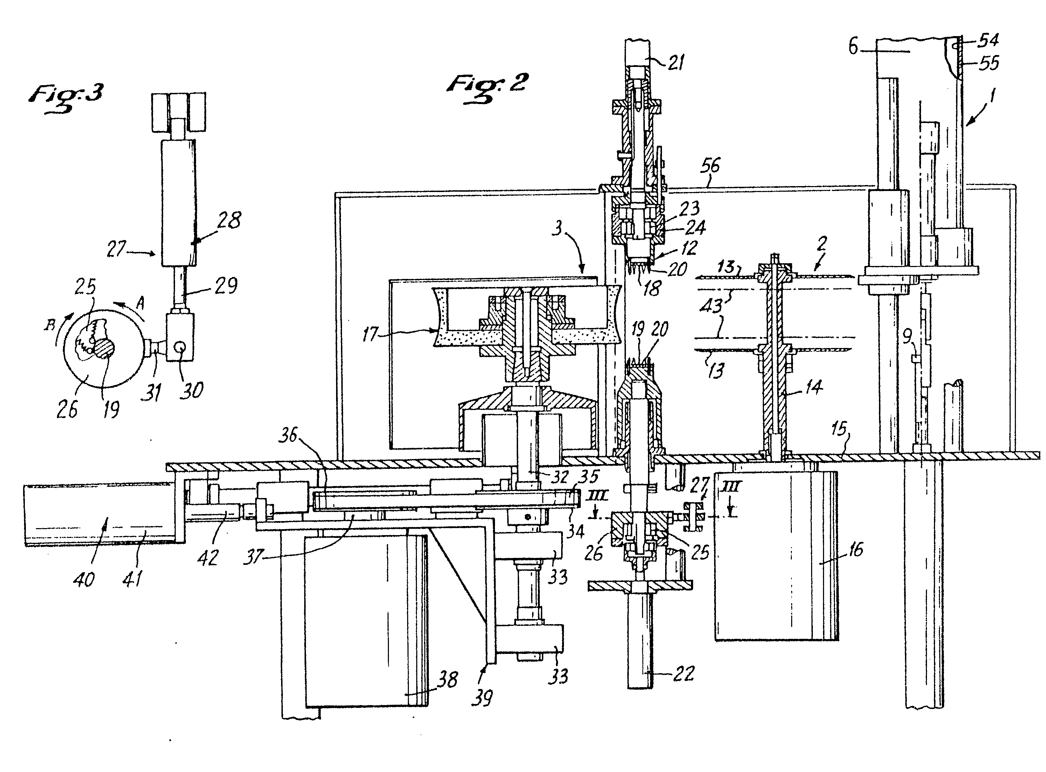

Suivant une caractéristique avantageuse, visible à la Fig. 2, la trémie 6 est garnie intérieurement d'un manchon élastique 54 sur toute sa hauteur. Le manchon est assujetti de manière étanche sur les bords supérieur et inférieur de la trémie pour définir une chambre annulaire 55 avec la paroi rigide de la trémie. Cette chambre 55 peut être gonflée de manière commandée (par une source d'air comprimé ou par un vérin pneumatique), de manière à retenir par friction les légumes empilés dans la trémie.

Les mors 8 sont de faible épaisseur, de manière à saisir le légume L par sa surface périphérique en dégageant largement les extrémités axiales du légume.

La structure proprement dite de la pince d'amenée 7 et ses moyens de commande sont identiques à ceux qui seront décrits plus loin pour la pince d'extraction 10 du poste d'extraction 5.

La pince 7 est portée par une tige horizontale 11 qui peut coulisser axialement de manière que la pince 7, successivement, se présente dans l'axe de la trémie 6, traverse le premier poste de coupe 2 et vienne dans l'axe de la pince de tournage 12 du poste de tournage 3, pour revenir ensuite dans l'axe de la trémie 6. Les moyens de commande du mouvement de la tige 11 (non représentés) sont par exemple du type à vérin.

Le premier poste de coupe 2 comporte deux scies circulaires espacées 13, calées sur un arbre vertical commun 14. L'arbre dépasse vers le bas de la table de travail 15 pour être entraîné en rotation continue par un moteur électrique 16. Les scies 13 sont espacées axialement pour pouvoir supprimer sur le légume qui passe entre elles une calotte 60 à chaque extrémité axiale et définir ainsi deux surfaces radiales planes 63.

La pince 7 et les scies 13 sont disposées pour que la pince et son équipage mobile ne heurtent ni les scies, ni l'arbre 14. Quand la pince 7, portant le légume L, traverse en un mouvement continu le poste de coupe 2, la pince passe entre les scies 13 et les deux calottes 60 sont détachées.

Le poste de tournage 3 comporte deux éléments essentiels : la pince de tournage 12 et l'outil de tournage 17.

La pince de tournage 12 est d'axe vertical. Elle comporte deux mors 18, 19 munis de dents ou aiguilles verticales 20. Ces mors peuvent coulisser verticalement, sous la commande de vérins à double effet 21, 22 respectifs, commandés ensemble. De plus, le mors supérieur 18, grâce à l'interposition d'un dispositif à roue libre 23 (Fig. 2) dont la bague extérieure 24 est fixe, peut librement tourner autour de son axe dans le sens de la flèche A (Fig. 1), tandis qu'il est bloqué en rotation dans le sens contraire, indiqué par la flèche B. De la même manière, un dispositif à roue libre 25 est placé entre le mors inférieur 19 et une bague extérieure 26 de commande. Les roues libres 23, 25 sont montées dans le même sens pour que les mors, par rapport à leurs bagues extérieures respectives 24, 26 puissent librement tourner dans le sens A et soient bloqués dans le sens B, pour une raison qui apparaîtra plus loin.

Alors que la bague extérieure supérieure 24 est fixe en rotation, la bague extérieure inférieure 26 est au contraire susceptible de tourner sur elle-même suivant un mouvement pas à pas sous la commande d'un système d'indexation 27 (Fig. 2 et 3). Ce système comporte par exemple un vérin 28 à double effet dont la tige 29 est articulée par une rotule 30 sur un bras 31 solidaire de la bague extérieure 26.

L'amplitude de la course du vérin est réglée de manière que celui-ci, à chaque course de contraction ou d'extension, imprime à la bague 26 une rotation de $1/n$ tour, n étant le nombre de facettes 61 à réaliser sur le légume. Le nombre n est généralement égal à 7.

On a schématiquement représenté sur la Fig. 3 l'orientation de la roue libre 25. On voit que, lorsque la bague 26 est entraînée par le vérin 28 dans le sens A (contraction du vérin), le mors 19 est entraîné positivement dans le même sens, alors que, lors de l'entraînement de la bague dans le sens B (extension du vérin), le mors 19 n'est pas entraîné. Il en résulte que, lorsque la bague 26 est maintenue fixe en rotation par le vérin 28, le mors 19 ne peut pas tourner dans le sens B.

L'outil de tournage 17 est constitué par une meule profilée, dite meule de forme, par exemple en carbure de silicium de qualité alimentaire.

Elle est calée sur un arbre vertical 32 qui dépasse vers le bas de la table 15 pour être supporté par deux paliers de roulement 33. Sur l'arbre 32 est également calée une poulie 34 qui reçoit une courroie sans fin 35 entraînée en continu par une poulie 36 calée sur l'arbre de sortie 37 d'un moteur électrique 38.

Le moteur 38 et les paliers 33 sont portés par un chariot 39, situé sous la table 15 et propre à coulisser radialement par rapport à l'axe de la pince 12, suivant une direction C, de sorte que la meule 17 peut être successivement rapprochée et éloignée de l'axe de la pince.

La commande du mouvement du chariot 39 est réalisée par un vérin horizontal 40 à double effet dont le corps 41 est fixe et dont la tige 42 est mobile et liée au chariot 39.

Dans l'exemple représenté, la meule 17 est à génératrice en arc de cercle et concave, de sorte que, sur le légume usiné, chaque facette 61 aura une forme torique concave en coupe radiale et convexe en coupe axiale.

La meule 17 est entraînée en rotation dans le sens D (Fig. 1) ; ce sens est tel que le légume en cours d'usinage est sollicité par la meule dans le sens B, à la manière d'une roue d'engrenage ; grâce à la présence des deux roues libres 23 et 25 qui bloquent les mors 18, 19 dans ce sens B, on est assuré que le légume ne tournera pas. Il est à noter que si l'on ne prévoyait qu'une seule roue libre, par exemple la roue libre inférieure 25, nécessaire pour l'indexage, en laissant l'autre mors libre en rotation dans les deux sens (la rotation dans un sens étant nécessaire pour l'étape d'indexage), le légume pourrait subir une torsion à partir du mors bloqué en rotation, ce qui nuirait à la qualité de l'usinage en produisant des facettes vrillées.

Le deuxième poste de coupe 4 est semblable au premier poste de coupe 2. les postes 2, 4 sont disposés par exemple symétriquement par rapport à l'axe C de coulissement du chariot 39.

Le poste 4 comporte donc également deux scies circulaires 43 calées sur un arbre vertical commun 44 qui est entraîné par un moteur électrique (non visible) monté sous la table 15. Comme montré en traits mixtes sur la Fig. 2, l'espacement axial des scies 43 est inférieur à celui des scies 13. Il est au plus égal à la largeur axiale de la meule 17.

La pince 10 du poste d'extraction 5 est portée par une tige 45 qui, sous l'action d'un vérin à double effet (non représenté) peut coulisser axialement de manière que la pince 10 puisse successivement venir en position coaxiale à la pince de tournage 12 pour saisir le légume usiné, passer entre les deux scies 43 sans interférer avec elles et l'arbre 44, pour l'enlèvement des parties terminales axiales 62 non usinées du légume et réaliser des faces terminales radiales planes 64, et atteindre une position d'extraction (seule cette position étant représentée), dans laquelle elle s'ouvre pour libérer par gravité le légume tourné fini L'.

La pince 10 comporte deux mors 46 articulés chacun autour d'un axe vertical 47 sur le corps de pince 48. A chaque mors 46 est associée une tringlerie 49 qui aboutit à une tige axiale commune 50 d'un vérin à double effet 51 qui commande l'ouverture et la fermeture de la pince et dont le corps 52 est fixe sur le corps 48. La tige 45 porte un doigt 53 qui coopère avec le vérin de coulissement (non représenté).

Le fonctionnement de la machine ressort déjà de la description qui précède. On en rappellera néanmoins les principales phases.

Au départ : les pinces 7, 10 sont ouvertes et dans la position représentée à la Fig. 1 ; les légumes L sont empilés dans la trémie 6 et retenus par le manchon 54 tendu par la chambre 55 sous pression ; les scies 13, 43 et la meule 17 tournent ; la meule 17 est reculée ; la pince de tournage 12 est ouverte.

On dégonfle la chambre 55. Les légumes sont libérés et descendent par gravité jusqu'à ce que le légume inférieur vienne en appui sur la butée 9 en traversant la pince 7 ouverte ; la chambre 55 est mise sous pression pour retenir désormais les autres légumes de la trémie ; la pince 7 est fermée puis transférée avec le légume brut L (Fig. 4A et 5A) jusque dans l'axe de la pince de tournage 12 ouverte ; au passage dans le poste 2, les parties terminales axiales du légume brut sont supprimées (Fig. 4B et 5B) ; la pince de tournage 12 se ferme et la pince d'amenée 7 s'ouvre pour reculer à vide jusqu'à revenir dans l'axe de la trémie en vue d'un nouveau cycle (la pince 7 reste ouverte jusqu'à la prise subséquente du légume suivant) ; la meule 17 est avancée pour réaliser la première facette 61 (Fig. 4C et 5C), puis recule pour permettre l'indexage d'un pas angulaire par le système 27 ; la meule avance à nouveau pour façonner la deuxième facette 61 (Fig. 4D et 5D), puis recule à nouveau pour l'indexage suivant ; quand toutes les facettes ont été réalisées (Fig. 4E et 5E), la meule 17 recule et la pince 10 s'avance en position ouverte jusqu'à venir dans l'axe de la pince de tournage 12 ; la pince 10 se ferme puis la pince 12 s'ouvre ; la pince 10 recule en portant le légume à facettes ; elle passe dans le poste de coupe 4 (Fig. 4F et 5F) qui supprime les parties terminales axiales du légume non usinées par la meule 17 et comportant les traces des pointes 20 ; quand la pince 10 atteint sa position la plus reculée, elle s'ouvre pour libérer par gravité le légume tourné fini L'. Un nouveau cycle peut alors commencer.

Ces opérations peuvent être commandées séquentiellement directement par l'opérateur mais, bien entendu, on aura de préférence recours à des moyens de commande automatique à programmateur comportant notamment, comme il est bien connu de l'homme de métier, tous dispositifs habituels de fins de course, de détection et de sécurité.

La machine peut avantageusement être complétée par des dispositifs annexes tels qu'un capot de protection 56 (enlevé sur la Fig. 1), un système d'arrosage et/ou de soufflage, à la fois pour nettoyer le légume usiné et pour évacuer les débris.

Comme indiqué précédemment, la machine des Fig. 1 à 3 est destinée à travailler un seul légume à la fois. Il est cependant entendu que l'invention s'applique aussi à des machines pouvant travailler plusieurs légumes à la fois.

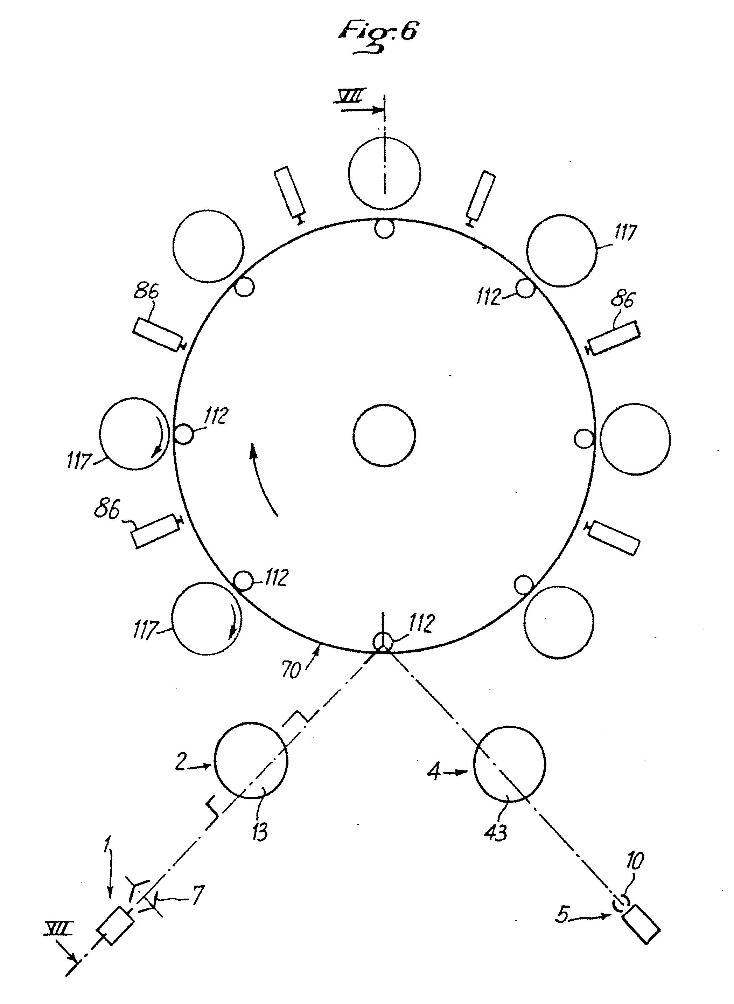

Un exemple d'une telle machine est schématiquement représenté aux Fig. 6 à 9.

Sur ces figures, on reconnaît le poste d'amenée 1 avec la pincée d'amenée 7 et la trémie 6, le premier poste de coupe 2 avec ses scies circulaires 13 et le moteur 16, le second poste de coupe avec ses scies circulaires 43, et le poste d'extraction 5 avec sa pince d'extraction 10. Ces postes 1, 2, 4 et 5 sont analogues à ceux de la machine des Fig. 1 à 3 ; leur description ne sera donc pas répétée.

La pince unique 12 des Fig. 1 à 3 est remplacée maintenant par un ensemble de pinces verticales 112 régulièrement réparties à la périphérie d'un manège 70. Si n est le nombre de facettes 61 à réaliser sur un légume, on prévoit n + 1 pinces ; dans le cas de 7 facettes, on prévoit donc 8 pinces angulairement espacées à 45°.

Les pinces 112 sont identiques. L'une d'elles est montrée avec plus de détails sur la Fig. 8. Elle est de conception générale analogue à la pince 12. Elle est d'axe vertical et comporte deux mors 118, 119 munis chacun de dents ou pointes axiales 120. Les mors sont portés chacun par une tige 71, 72, avec interposition d'une roue libre 123, 125, qui traverse des plaques supérieure 73 et inférieure 74 de support, constituant le manège proprement dit, pour coopérer par leur extrémité libre chacune avec une plaque fixe 75, 76 formant came, avec interposition d'un roulement 77, 78. Les pinces sont sollicitées vers la position ouverte par un ressort 79, 80 agissant entre la plaque 73, 74 et la tige associée 71, 72.

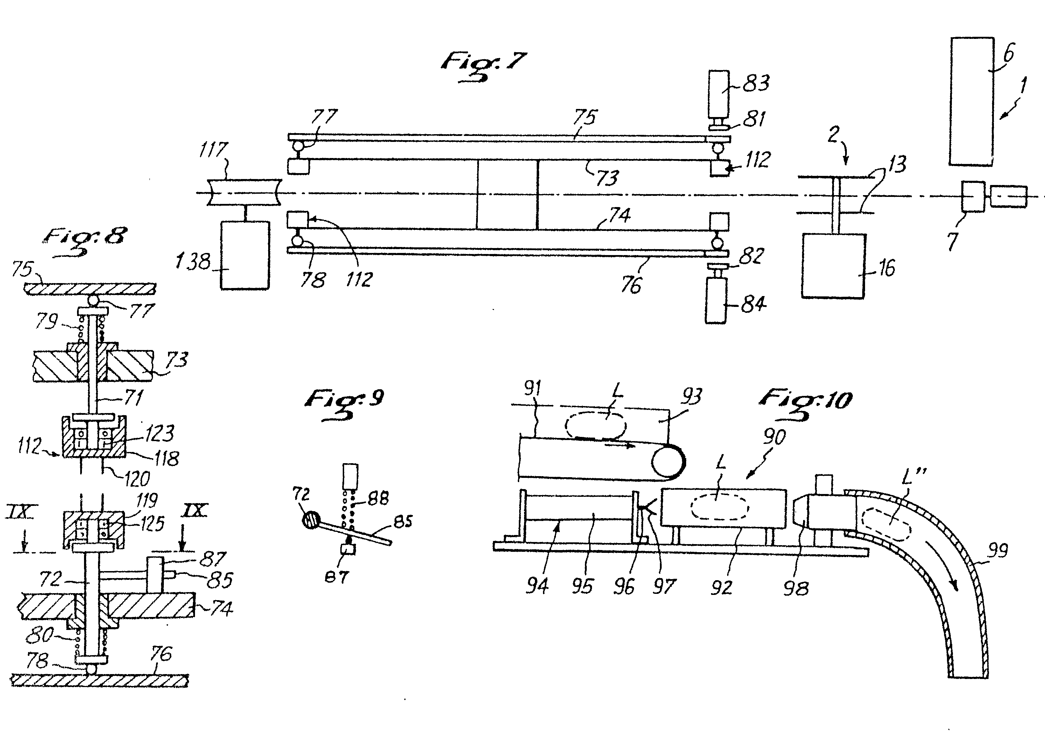

Dans la zone d'alimentation du manège 70 en légumes bruts et d'extraction des légumes sur lesquels les facettes ont été usinées, les plaques fixes 75, 76 sont interrompues et remplacées par des patins 81, 82 (Fig. 7) portés par la tige de vérins 83, 84 à double effet commandés ensemble. Quand les vérins sont déployés, leurs patins 81, 82 prolongent les plaques 75, 76 pour fermer la pince présente dans cette zone, tandis que, lorsqu'ils sont contractés, leurs patins s'écartent et permettent aux ressorts 79, 80 d'ouvrir la pince.

Autour du manège sont régulièrement disposées des meules de tournage 117, analogues à la meule 17. Les meules 117 sont entraînées en continu, soit chacune par un moteur propre 138 (Fig. 7), soit à partir d'un moteur unique commandant une chaîne ou une courroie d'entraînement commun. Comme précédemment, chaque meule 117 est susceptible d'un mouvement radial de rapprochement et d'éloignement par rapport à la pince 112 qui se présente.

Le manège 70 portant les pinces 112 est animé d'un mouvement de rotation pas à pas amenant à chaque pince successivement, depuis la zone d'entrée (qui est aussi la zone de sortie), en regard de chaque meule.

Pour que le légume tenu par une pince 112 tourne sur lui-même de 1/n tour en passant d'une meule 117 à la suivante, il faut imprimer aux pinces, à chaque passage entre deux meules 117 successives, une rotation dont l'amplitude dépend du nombre de facettes 61 à réaliser et de l'espacement angulaire entre deux meules, mesuré sur le manège.

Pour cela, au moins d'une des tiges 71, 72 de chaque pince 112 porte un bras horizontal 85 qui, au passage entre deux meules 117 successives, est actionné en rotation par un vérin 86 ; la roue libre 125 permet la rotation de la pince dans le sens de l'indexage mais interdit sa rotation dans l'autre sens quand le bras 85, libéré de l'action du vérin 86 qui s'est rétracté, revient en appui contre une butée 87 sous l'action d'un ressort de rappel 88. La butée 87 et le ressort 88 sont portés par la plaque 74 du manège.

En variante, on pourrait caler sur chaque pince 112 un pignon satellite que l'on ferait engrener avec une roue planétaire entraînée par le manège 70 suivant un rapport d'engrènement tel que chaque pince tourne sur elle-même de 1/n tour par rapport au manège, entre deux meules 117 successives.

Suivant une autre variante, on pourrait prévoir pour le manège 70 un poste d'alimentation et un poste d'extraction en des emplacements angulairement espacés d'un pas, en ajoutant une pince, ce qui permettrait d'augmenter la production en chargeant le manège avec un nouveau légume dans le même temps qu'on en extrait un légume tourné fini. Les deux pinces 7, 10 fonctionneraient alors ensemble.

En donnant aux meules 117 un mouvement d'avance et de recul par rapport au manège 70 et en arrêtant le manège pour chaque opération de tournage, on obtient la même forme de facettes qu'avec la machine des Fig. 1 à 3, cette forme étant visible aux Fig. 4F et 5F et concave en coupe radiale.

Toutefois, dans une version simplifiée de la machine à plusieurs têtes, on pourrait laisser les meules 117 d'axe fixe et entraîner le manège en continu, l'indexage des pinces se faisant soit de manière discontinue par les vérins 86, soit en continu par le dispositif à pignons satellites et planétaire. On obtiendrait alors des facettes qui seraient cette fois convexes circulaires en coupe radiale, mais toujours séparées par des arêtes situées chacune dans un plan axial.

On a supposé jusqu'à présent que les légumes L sont, à l'entrée dans la machine (Fig. 1 à 3 ou Fig. 6 à 9), à l'état brut, c'est-à-dire qu'ils ne sont ni calibrés, ni préusinés.

Suivant une variante d'exécution, applicable surtout mais non exclusivement aux pommes de terre, on peut calibrer les légumes par usinage avant le tournage pour, d'une part, réduire le temps de tournage proprement dit de chaque facette et, d'autre part, faire enlever par la ou les meules le moins de matière possible, ce qui réduit le volume de bouillie à évacuer et à récupérer du poste de tournage et permet de récupérer la matière excédentaire essentiellement sous forme de morceaux évacués du poste de calibrage.

Avantageusement, le poste de calibrage est tel que les légumes se présentent à la pince d'amenée 7 sous la forme d'un cylindre terminé par deux calottes bombées, celles-ci n'étant pas intéressées par le calibrage.

On a schématiquement représenté à la Fig. 10 un tel poste 90 de calibrage. Ce poste comporte une bande transporteuse horizontale 91 dont l'extrémité de sortie est à l'aplomb d'un canal horizontal 92 en V ouvert vers le haut et de direction parallèle à la direction d'avance de la bande 91. Sur la bande 91, les légumes L sont orientés longitudinalement par une tôle 93. Sous la bande 91 est prévu un vérin longitudinal à double effet 94 dont le corps 95 est fixe et dont la tige 96 porte un embout profilé 97 pouvant évoluer sensiblement au milieu du canal 92 en V. A l'extrémité de sortie du canal 92 est disposée une filière fixe 98 formant un couteau circulaire d'axe horizontal. Le diamètre de la filière 98 est légèrement supérieur au diamètre du plus grand cercle circonscrit au légume fini L' (Fig. 5F). A la sortie de la filière 98 est monté un tube en caoutchouc souple 99 coudé vers le bas et débouchant à l'aplomb de la butée 9 (Fig. 1) de laquelle il est suffisamment éloigné pour le passage de la pince d'amenée 7.

Le poste de calibrage 90 alimente la trémie 6 ou la remplace.

Le fonctionnement est le suivant. Les légumes bruts L sont délivrés sur la bande 91 à un rythme prédéterminé ; ils sont orientés longitudinalement par la tôle 93 et tombent à l'unité, dans cette position, sur le canal 92 en V qui, le cas échéant, corrige leur position. Suivant un rythme prédéterminé, le vérin 94 est actionné pour pousser le légume vers la filière 98 qui découpe un copeau annulaire. Le légume L" sortant de la filière est donc cylindrique et présente deux calottes axiales terminales, non intéressées par le calibrage. Le vérin 94 continue à pousser le légume calibré L" jusqu'au coude du tube, jusqu'à ce qu'il tombe par gravité sur la butée 9, entre les mors ouverts 8 de la pince 7 ou, en variante, dans la trémie 6.

**Revendications**

1. Machine à tourner, c'est-à-dire à mettre en forme, les légumes ou articles analogues, à outil de tournage, comprenant aussi des outils de coupe de parties terminales du légume et des moyens de transfert, caractérisée par le fait qu'elle comporte : une pince de tournage (12 ; 112) comprenant deux mors (18, 19 ; 118, 119) propres à saisir le légume (L) sur deux extrémités opposées, ou parties terminales (62), par actions axiales antagonistes sur l'axe de rotation sur elle-même de la pince ; au moins un outil de tournage (17 ; 117) tournant autour d'un axe parallèle à l'axe commun de la pince de tournage et du légume, cet outil étant en forme de solide de révolution autour de son axe de rotation ; des moyens pour successivement rapprocher et éloigner l'outil de tournage (17 ; 117) par rapport à la pince de tournage (12 ; 112) ; des moyens (27 ; 86) pour faire tourner la pince sur elle-même d'un angle prédéterminé entre deux opérations de tournage, de manière que des facettes (61) successives soient formées sur la surface latérale du légume ; des moyens d'extraction du légume hors de la pince et de transfert (10) ; et un poste de coupe de sortie (4) à deux outils de coupe (13, 43) espacées, propres à supprimer sur le légume (L) à facettes (61) ses parties terminales (62) au moins dans les zones où l'outil de tournage n'a pas enlevé de matière, de manière que les facettes usinées (61) débouchent axialement sur deux faces radiales terminales (64).

2. Machine selon la revendication 1, caractérisée par le fait qu'elle comporte en outre au moins l'un des éléments suivants : un poste d'amenée (1) comprenant une pince d'amenée (7) mobile, d'axe parallèle à celui du légume (L) et agencée pour saisir celui-ci sur sa surface périphérique en laissant libres ses parties terminales (60) ; un poste de coupe d'entrée (2) à deux outils de coupe espacés (13) propres à supprimer initialement sur le légume deux parties terminales préliminaires (60) ; des moyens moteurs pour faire passer la pince d'amenée successivement d'un poste (6) d'alimentation en légumes audit poste de coupe d'entrée (2), puis à la pince de tournage (12 ; 112) ; un poste d'extraction (5) comprenant, comme moyens d'extraction et de transfert, une pince d'extraction (10) mobile d'axe parallèle à celui du légume et agencée pour saisir celui-ci sur sa surface périphérique à facettes, en laissant libres les extrémités axiales (62) du légume, et des moyens moteurs pour faire passer la pince d'extraction (10) successivement de la zone de la pince de tournage (12 ; 112), au poste de coupe de sortie (4), puis à un poste d'extraction (5) où elle libère le légume fini (L').

3. Machine selon l'une des revendications 1 et 2, caractérisée par le fait que l'outil de tournage est concave et de forme torique à génératrice en arc de cercle.

4. Machine selon l'une des revendications 1 à 3, caractérisée par le fait qu'elle comporte, avant la pince de tournage et, éventuellement, le poste d'amenée, une trémie d'entrée (6), de préférence convergente, dans laquelle les légumes sont retenus par un manchon élastique (54) définissant avec la paroi de la trémie une chambre gonflable (55).

5. Machine selon l'une des revendications 2 à 4, caractérisée par le fait que chaque pince (7, 10) est agencée pour passer librement entre les deux outils de coupe (13, 43), ces outils étant de préférence des scies circulaires.

6. Machine selon l'une des revendications 1 à 5, caractérisée par le fait que l'un au moins des mors (18, 19 ; 118, 119) de la pince de tournage (12 ; 112) est associé à un système à roue libre (23, 25 ; 123, 125) permettant à la pince de tourner sur elle-même pour la rotation pas à pas d'indexage, mais lui interdisant de tourner sous l'effet de l'entraînement par l'outil de tournage pendant l'usinage d'une facette.

7. Machine selon l'une des revendications 1 à 6, caractérisée par le fait que la rotation pas à pas d'indexage de la pince de tournage (12 ; 112) est obtenue par un bras (31 ; 85) porté par la pince et actionné en rotation par un vérin (28 ; 86).

8. Machine selon l'une des revendications 1 à 7, caractérisée par le fait qu'elle comporte un seul outil de tournage (17) et une seule pince de tournage (12) d'axe fixe.

9. Machine selon l'une des revendications 1 à 7, caractérisée par le fait qu'elle comporte plusieurs outils de tournage (117) et plusieurs pinces de tournage (112) d'axe mobile.

10. Machine selon la revendication 9, caractérisée par le fait que les pinces de tournage (112) sont régulièrement réparties à la périphérie d'un manège (70) tournant, le nombre de pinces étant au moins égal à celui des outils de tournage (117), et de préférence supérieur de un ou deux à ce nombre, les outils de tournage étant régulièrement répartis autour du manège (70).

11. Machine selon la revendication 10, caractérisée par le fait que les pinces de tournage (112) peuvent tourner sur elles-mêmes par rapport au manège et coopèrent par leurs extrémités éloignées des mors (118, 119) avec des plaques fixes de fermeture (75, 76), ces plaques étant supprimées dans la ou les zones de chargement et de déchargement du manège en légumes, des moyens (83, 84) de fermeture des pinces étant prévus dans ces zones.

12. Machine selon l'une des revendications 10 et 11, caractérisée par le fait que le manège (70) est entraîné en rotation en continu et que les outils de tournage (117) sont d'axe fixe.

13. Machine selon l'une des revendications 10 et 11, caractérisée par le fait que le manège (70) est entraîné en rotation pas à pas et que les outils de tournage (117) sont susceptibles d'un mouvement radial de rapprochement et d'éloignement par rapport au manège.

14. Machine selon l'une des revendications 10 à 13, caractérisée par le fait que chaque pince (112) porte un pignon satellite engrenant avec une roue planétaire coaxiale au manège (70), le rapport d'engrenage étant tel que chaque pince tourne de 1/n tour (n étant le nombre de facettes sur le légume fini L') par rapport au manège entre deux outils de tournage successifs (117).

15. Machine selon l'une des revendications 1 à 14, caractérisée par le fait qu'elle comporte un poste d'entrée (90) de calibrage des légumes (L), ce poste comprenant un transporteur d'entrée (91), une filière (98) en forme de couteau annulaire et un transporteur de sortie (99).

**Claims**

1. Machine for turning, that is to say putting into form, vegetables or analogous articles, with turning tool, also comprising tools for cutting off terminal parts of the vegetable and transfer means, characterised in that it comprises : a turning gripper (12 ; 112) comprising two jaws (18, 19 ; 118, 119) adapted to grasp the vegetable (L) at two opposite extremities or terminal parts (62) by opposite axial actions on the axis of revolution of the gripper on itself ; at least one turning tool (17 ; 117) turning about an axis parallel to the common axis of the turning gripper and the vegetable, this tool being in the form of a solid of revolution about its rotation axis ; means for causing the turning tool (17 ; 117) successively to approach and depart from the turning gripper (12 ; 112) ; means for causing the gripper to turn upon itself through a pre-determined angle between two turning operations in such manner that successive facets (16) may be formed on the lateral surface of the vegetable ; means for extraction of the vegetable from the gripper and transfer means (10) ; and an exit cutting station (4) having two spaced cutting tools (13, 43) adapted to eliminate from the faceted (61) vegetable (L) its terminal parts (62) at least in the zones where the turning tool has not removed material, in such manner that the machined facets (61) run axially into two terminal radial faces (64).

2. Machine according to Claim 1, characterised in that it further comprises at least one of the following elements : a feed station (1) comprising a movable feed gripper (7), with axis parallel to that of the vegetable (L) and arranged to grasp the latter on its peripheral surface leaving its terminal parts (60) free ; an entry cutting station (2) having two spaced cutting tools (13) adapted initially to eliminate two preliminary terminal parts (60) from the vegetable ; motor means for passing the feed gripper successively from a vegetable supply station (6) to the said entry cutting station (2), then to the turning gripper (12 ; 112) ; an extraction station (5) comprising, as extraction and transfer means, a movable extraction gripper (10) with axis parallel to that of the vegetable and arranged to grasp the latter on its faceted peripheral surface, leaving the axial extremities (62) of the vegetable free, and motor means for passing the extraction gripper (10) successively from the zone of the turning gripper (12 ; 112) to the exit cutting station (4), then to an extraction station (5) where it frees the finished vegetable (L').

3. Machine according to one of claims 1 and 2, characterised in that the turning tool is concave and of torus form with generatrix of circular arc form.

4. Machine according to one of Claims 1 to 3, characterised in that it comprises, before the turning gripper and possibly the feed station, a preferably convergent entry hopper (6) in which the vegetables are retained by an elastic sleeve (54) which with the wall of the hopper defines an inflatable chamber (55).

5. Machine according to one of Claims 2 to 4, characterised in that each gripper (7, 10) is arranged to pass freely between the two cutting tools (13, 43), these tools preferably being circular saws.

6. Machine according to one of Claims 1 to 5, characterised in that at least one of the jaws (18, 19 ; 118, 119) of the turning gripper (12 ; 112) is associated with a free-wheel system (23, 25 ; 123, 125) permitting the gripper to turn upon itself for step-by-step indexing rotation, but preventing it from turning under the effect of drive by the turning tool during the machining of a facet.

7. Machine according to one of Claims 1 to 6, characterised in that the step-by-step indexing rotation of the turning gripper (12 ; 112) is obtained by an arm (31 ; 85) carried by the gripper and actuated in rotation by an actuator (28 ; 86).

8. Machine according to one of Claims 1 to 7, characterised in that it comprises one single turning tool (17) and one single turning gripper (12) with fixed axis.

9. Machine according to one of Claims 1 to 7, characterised in that it comprises a plurality of turning tools (117) and a plurality of turning grippers (112) of movable axis.

10. Machine according to Claim 9, characterised in that the turning grippers (112) are distributed regularly on the periphery of a rotating turntable device (70), the number of grippers being at least equal to that of the turning tools (117) and preferably greater than that number by one or two, the turning tools being regularly distributed around the turntable device (70).

11. Machine according to Claim 10, characterised in that the turning grippers (112) can turn upon themselves· in relation to the turntable device and co-operate by their extremities remote from the jaws (118, 119) with fixed closure plates (75, 76), these plates being eliminated in the zone or zones of charging and discharge of vegetables to and from the turntable device, means (83, 84) for closure of the grippers being provided in these zones.

12. Machine according to one of Claims 10 and 11, characterised in that the turntable device (70) is driven continuously in rotation and in that the turning tools (117) have fixed axes.

13. Machine according to one of Claims 10 and 11, characterised in that the turntable device (70) is driven in rotation step by step and in that the turning tools (117) are capable of a radial approaching and departure movement in relation to the turntable device.

14. Machine according to one of Claims 10 to 13, characterised in that each gripper (112) carries a satellite pinion meshing with a planet wheel coaxial with the turntable device (70), the gear ratio being such that each gripper turns by 1/n revolution (n being the number of facets on the finished vegetable L') in relation to the turntable device between two successive turning tools (117).

15. Machine according to one of Claims 1 to 14, characterised in that it comprises an entry station (90) for calibration of the vegetables (L) this station comprising an entry conveyor (91), a die (98) in the form of a annular knife and an exit conveyor (99).

## Patentansprüche

1. Maschine zum Drehen, d. h. zur Formgebung, von Gemüsestücken o. dgl. Gegenständen mit einem Drehwerkzeug, welche außerdem Schneidwerkzeuge für die Endabschnitte des Gemüsestückes sowie Fördereinrichtungen umfaßt, dadurch gekennzeichnet, daß sie folgende Einrichtungen enthält : eine Drehspannvorrichtung (12 ; 112) mit zwei Spannbacken (18, 19 ; 118, 119) zum Erfassen des Gemüsestückes (L) an zwei gegenüberliegenden Enden oder Endabschnitten (62) durch entgegengesetztes axiales Angreifen in Richtung der eigenen Drehachse der Spannvorrichtung, mindestens ein Drehwerkzeug (17 ; 117), welches sich um eine zur gemeinsamen Achse der Drehspannvorrichtung un des Gemüsestückes parallele Achse dreht, wobei dieses Werkzeug die Form eines zu seiner Drehachse rotationssymmetrischen Körpers besitzt, Einrichtungen, um das Drehwerkzeug (17 ; 117) in Bezug auf die Drehspannvorrichtung (12 ; 112) nacheinander zuzustellen und wieder wegzurücken, Einrichtungen (27 ; 86), um die Spannvorrichtung zwischen zwei Drehvorgängen um einen vorgegebenen Winkel um sich selbst drehen zu lassen, derart, daß auf der Seitenfläche des Gemüsestücks abgesetzte Schleifflächen (16) ausgebildet werden, Einrichtungen zum Herausziehen des Gemüsestücks aus der Spannvorrichtung und zum Weiterbefördern (10) und eine Ausgangsschneidestation (4) mit zwei beabstandeten Schneidwerkzeugen (13, 43), um an dem mit Schleifflächen (61) versehenen Gemüsestück (L) dessen Endabschnitte (62) zumindest in den Bereichen, wo das Drehwerkzeug nichts abgetragen hat, derart zu entfernen, daß die eingearbeiteten Schleifflächen (61) in Axialrichtung auf zwei radiale Endflächen (64) stoßen.

2. Maschine nach Anspruch 1, dadurch gekennzeichnet, daß sie mindestens eines der folgenden Elemente umfaßt : eine Eingabestation (1) mit einer beweglichen Eingabespannvorrichtung (7), welche eine zur Achse des Gemüsestücks (L) parallele Achse aufweist und dazu eingerichtet ist, das Gemüsestück an seiner Umfangsfläche zu erfassen und dabei die Endabschnitte (60) freizulassen, eine Eingangsschneidestation (2) mit zwei voneinander beabstandeten Schneidewerkzeugen (13), um anfangs an dem Gemüsestück zwei vorläufige Endabschnitte (60) abzutrennen, Antriebseinrichtungen, um die Eingabespannvorrichtung nacheinander von einer Gemüsezufuhrstation (6) zu der genannten Eingangsschneidestation und dann zu der Drehspannvorrichtung (12 ; 112) gelangen zu lassen, eine Abzugsstation (5), welche als Einrichtung zum Abziehen und Weiterbefördern eine bewegliche Abzugsspannvorrichtung (10), deren Achse parallel zu der des Gemüsestücks verläuft und die dazu eingerichtet ist, das Gemüsestück an seiner mit Schleifflächen versehenen Umfangsfläche zu erfassen und die axialen Enden (62) des Gemüsestücks freizulassen, sowie eine Antriebseinrichtung aufweist, und die Abzugsspannvorrichtung (10) nacheinander von dem Bereich der Drehspannvorrichtung (12 ; 112) zur Ausgangsschneidestation (4) und dann zur Abzugsstation (5) zu bringen, wo sie das fertige Gemüsestück (L') freigibt.

3. Maschine nach einem der Ansprüche 1 und 2, dadurch gekennzeichnet, daß das Drehwerkzeug konkav und torusförmig zur Erzeugung eines Kreisbogens gestaltet ist.

4. Maschine nach einem der Ansprüche 1 bis 3, dadurch gekennzeichnet, daß sie vor der Drehspannvorrichtung und gegebenenfalls der Eingabestation einen vorzugsweise konvergierenden Eingangsssschacht (6) aufweist, in welchem die Gemüsestücke mittels einer elastischen Muffe (54) gehalten werden, welche zusammen mit der Wand des Schachtes eine aufblasbare Kammer (55) bildet.

5. Maschine nach einem der Ansprüche 2 bis 4, dadurch gekennzeichnet, daß jede Spannvorrichtung (7, 10) dazu eingerichtet ist, sich frei zwischen den Schneidewerkzeugen (13, 43) zu bewegen, wobei diese Werkzeuge vorzugsweise Kreissägen sind.

6. Maschine nach einem der Ansprüche 1 bis 5, dadurch gekennzeichnet, daß mindestens einer der Spannbacken (18, 19 ; 118, 119) der Drehspannvorrichtung (12 ; 112) mit einem Freilaufsystem (23, 25 ; 123, 125) verbunden ist, welches es der Drehspannvorrichtung gestattet, sich zu einer Drehung mit schrittweiser Verriergelung um sich selbst zu drehen, welches sie jedoch daran hindert, sich unter der Einwirkung des Angriffs durch das Drehwerkzeug während der Bearbeitung einer Schleiffläche zu drehen.

7. Maschine nach einem der Ansprüche 1 bis 6, dadurch gekennzeichnet, daß die Drehung mit schrittweiser Verriegelung bei der Drehspannvorrichtung (12 ; 112) durch einen Arm (31 ; 85) vorgenommen wird, welcher von der Spannvorrichtung getragen wird und durch einen Stellzylinder (28 ; 86) betätigt wird.

8. Maschine nach einem der Ansprüche 1 bis 7, dadurch gekennzeichnet, daß sie ein einziges Drehwerkzeug (17) und eine einzige Drehspannvorrichtung (12) mit feststehender Achse aufweist.

9. Maschine nach einem der Ansprüche 1 bis 7, dadurch gekennzeichnet, daß sie mehrere Drehwerkzeuge (117) und mehrere Drehspannvorrichtungen (112) mit beweglcher Achse aufweist.

10. Maschine nach Anspruch 9, dadurch gekennzeichnet, daß die Drehspannvorrichtungen (112) gleichmäßig am Umfang eines Drehkarussells (70) angeordnet sind, wobei die Zahl der Spannvorrichtungen mindestens gleich der der Drehwerkzeuge und vorzugsweise um eins oder zwei größer ist als diese Zahl und wobei die Drehwerkzeuge gleichmäßig um das Karussell (70) herum verteilt sind.

11. Maschine nach Anspruch 10, dadurch gekennzeichnet, daß die Drehspannvorrichtungen (112) sich in Bezug auf das Karussell um sich selbst drehen können und daß sie mit ihren von den Spannbacken (118, 119) entfernten Enden mit feststehenden Abschlußplatten (75, 76) zusammenwirken, wobei diese Platten in der bzw. den Gemüse-Belade- und -Entladezonen des Karussels ausgenommen sind und wobei in diesen Zonen Abschlußvorrichtungen (83, 84) fur die Spannvorrichtungen vorgesehen sind.

12. Maschine nach einem der Ansprüche 10 und 11, dadurch gekennzeichnet, daß das Karussell (70) ständig in Drehbewegung gehalten wird und daß die Drehwerkzeuge (117) mit feststehenden Achsen versehen sind.

13. Maschine nach einem der Ansprüche 10 und 11, dadurch gekennzeichnet, daß das Karussell (70) schrittweise gedreht wird und daß die Drehwerkzeuge (117) eine radiale Annäherungs- und Entfernungsbewegung bezüglich des Karussells erfahren können.

14. Maschine nach einem der Ansprüche 10 bis 13, dadurch gekennzeichnet, daß jede Spannvorrichtung (112) ein Planetenrad aufweist, welches mit einem zum Karussell (70) koaxialen Umlaufrad kämmt, wobei das Übersetzungsverhältnis derart gewählt ist, daß jede Spannvorrichtung sich mit 1/n Umdrehungen (wobei n die Anzahl der Schleifflächen auf dem fertigen Gemüsestück L' ist) bezüglich des Karussells zwischen zwei aufeinanderfolgenden Drehwerkzeugen (117) dreht.

15. Maschine nach einem der Ansprüche 1 bis 14, dadurch gekennzeichnet, daß sie eine Eingangsstation (90) zur Maßvereinheitlichung der Gemüsestücke (L) aufweist, wobei diese Station eine Eingangsfördereinrichtung (91), eine Schneidvorrichtung (98) in Form eines Rundmessers und eine Ausgangsfördereinrichtung (99) aufweist.

*Fig:1*

*Fig.3*

*Fig.2*

0 088 000

## Fig:4

A · 60 · 13 · 2 · B · 63 · C · 63 · D · 63 · E · 63 · 62 · 4 · 43 · F · 64

L · 60 · 13 · 13 · 63 · 63 · 61 · 63 · 63 · 61 · 63 · 61 · 61 · 63 · 62 · 43 · 61 · 64 · L'

## Fig:5

A · B · C · D · E · F

L · 60 · 63 · 63 · 63 · 63 · 62 · L'

61 · 3 · 17 · 61 · 3 · 17 · 61 · 61 · 64

0 088 000

0 088 000

*Fig:6*

4

*Fig.7*

*Fig.8*

*Fig.9*

*Fig.10*

0 088 000